Europäisches Patentamt

European Patent Office

Office européen des brevets

(11) Numéro de publication: **0 213 992**
**A1**

(12) **DEMANDE DE BREVET EUROPEEN**

(21) Numéro de dépôt: 86401589.6

(22) Date de dépôt: 16.07.86

(51) Int. Cl.⁴: **G 05 B 19/23**
**H 02 P 5/165**

(30) Priorité: 18.07.85 FR 8511006

(43) Date de publication de la demande:
11.03.87 Bulletin 87/11

(84) Etats contractants désignés:
DE FR GB IT

(71) Demandeur: JAEGER
2, rue Baudin
F-92303 Levallois-Perret(FR)

(72) Inventeur: Bezard, Jean-Jacques
11, rue des Bois aux Petits Chênes
F-78400 Chatou(FR)

(72) Inventeur: Mian, Robert
61, rue Marcadet
F-75018 Paris(FR)

(74) Mandataire: Schrimpf, Robert et al,
Cabinet Regimbeau 26, Avenue Kléber
F-75116 Paris(FR)

(54) Procédé et dispositif de commande de moteur à courant continu.

(57) L'invention est relative à un procédé et un dispositif de commande de moteur à courant continu.

Après application des tensions d'alimentation d'induit du moteur (1), la composante périodique du courant d'induit est détectée (3) et le nombre de périodes de celle-ci est compté (4). Ce nombre est comparé (5) à une valeur de référence représentative de la position de l'arbre du moteur à atteindre et l'arrêt du moteur (1) est commandé (6), (21), lorsque le nombre a atteint la valeur de référence.

Application à la commande d'équipement de véhicules automobiles.

FIG-2

"PROCEDE ET DISPOSITIF DE COMMANDE DE MOTEUR A COURANT CONTINU"

La présente invention est relative à un procédé et à un dispositif de commande de moteur à courant continu et à leur utilisation pour la commande en position d'éléments ou charges mobiles.

Actuellement l'automatisation des équipements domestiques ou industriels tend à généraliser l'utilisation d'organes d'asservissement ou de commande en position mettant en oeuvre des moteurs électriques. Dans le domaine de l'équipement automobile notamment, le type de moteurs utilisés dans ce but est plus particulièrement du genre moteur à courant continu en raison du mode d'alimentation en énergie électrique normalement disponible dans ce type d'installation.

Afin de réaliser les commandes ou asservissements en position précités, les moteurs utilisés sont, le plus souvent, en particulier lorsqu'une pluralité de positions doivent pouvoir être atteintes, commandés par un circuit du type circuit d'asservissement comprenant une boucle de retour nécessitant la mise en oeuvre d'organes de recopie de la position instantanée de la charge et de comparaison de cette position à une position de consigne à atteindre. Ces dispositifs dont la conception est parfaitement maîtrisée par l'homme de l'art donnent satisfaction sur le plan du fonctionnement en tant que tel.

Ils présentent cependant l'inconvénient de nécessiter la mise en oeuvre de composants électromécaniques supplémentaires, lesquels en raison même de la multiplication du nombre d'organes de commande dans une même installation, peuvent conduire à une consommation d'énergie électrique trop importante, dans le cas de l'équipement automobile lors de la commande simultanée de ceux-ci notamment.

2

En outre, la multiplication, en nombre important, des organes électromécaniques dans une installation a pour effet, même dans le cas où ces organes électromécaniques sont d'une qualité de premier ordre, de diminuer notablement la fiabilité de l'ensemble suite à des opérations successives de ces organes.

La présente invention a pour but de remédier aux inconvénients précités par la mise en oeuvre d'un procédé et d'un dispositif de commande d'un moteur à courant continu dans lesquels les composants ou organes électromécaniques sont réduits au maximum.

Un objet de la présente invention est en outre la mise en oeuvre d'un procédé et d'un dispositif de commande de moteur à courant continu automatisé.

Un autre objet de la présente invention est également la mise en oeuvre d'un procédé et d'un dispositif de commande d'un moteur à courant continu permettant l'intégration de ces derniers dans une installation comportant une pluralité de moteurs commandés, conformément à l'objet de l'invention, au moyen d'un microprocesseur ou d'un micro-ordinateur.

Un autre objet de la présente invention est la mise en oeuvre d'équipements de commande de poids réduit par diminution du nombre de composants électromédaniques et du câblage permettant notamment, dans le cas de l'équipement automobile, une réduction du coût et de la consommation.

Le procédé de commande d'un moteur à courant continu conforme à l'invention consiste à appliquer au moteur les tensions d'alimentation d'induit et d'inducteur, à détecter la composante périodique du courant d'alimentation d'induit, à établir un comptage-décomptage du nombre de périodes de la composante périodique engendrée par le fonctionnement du moteur, à comparer le nombre de périodes compté ou décompté à une valeur de référence représentative d'une position ou nombre de tours de l'arbre moteur, à déclencher une commande d'arrêt du moteur, lorsque le nombre de périodes compté ou décompté a atteint la valeur de référence.

Le dispositif de commande d'un moteur à courant continu comprenant des moyens d'alimentation de l'induit du moteur capables d'assurer la rotation du moteur en sens direct ou rétrograde est remarquable en ce qu'il comporte des moyens de détection de la composante périodique du courant d'alimentation d'induit, des moyens de comptage-décomptage du nombre de périodes de ladite composante alternative du courant d'induit, des moyens de comparaison en grandeur et en signe du nombre de périodes de la composante périodique engendrées par le fonctionnement du moteur, à partir de l'instant de démarrage du moteur, à une valeur de référence représentative d'une position ou nombre de tours de l'arbre du moteur, des moyens d'enclenchement-déclenchement des moyens d'alimentation d'induit, commandés par les moyens de comparaison, ladite comparaison en signe permettant de déclencher la commutation correspondante, en fonction du signe, des moyens d'alimentation d'induit pour obtenir la rotation du moteur dans l'un ou l'autre sens et la comparaison en grandeur permettant de déclencher ou commander l'arrêt du moteur lorsque le nombre de périodes compté ou décompté a atteint ladite valeur de référence.

L'invention trouve application pour la commande d'équipements de toute nature et en particulier de véhicules automobiles.

Elle sera mieux comprise à la lecture de la description et à l'observations des dessins ci-après dans lesquels :

- les figures 1a, 1b et 1c représentent respectivement un diagramme de l'intensité d'induit du moteur et des schémas synoptiques du procédé correspondant de l'invention,

- la figure 2 représente un schéma fonctionnel du dispositif de l'invention,

- la figure 3 représente un mode de réalisation avantageux du dispositif tel que représenté en figure 2.

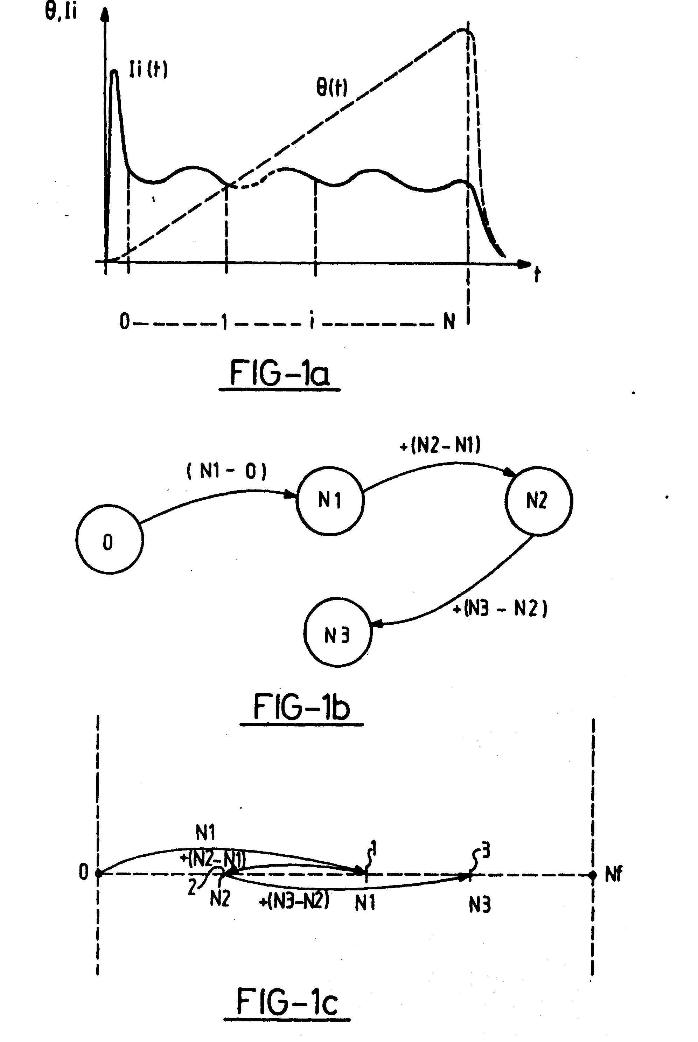

Le procédé objet de l'invention sera tout d'abord décrit en liaison avec les figures 1a, 1b, 1c.

Sur la figure 1a, on a représenté un diagramme de l'intensité d'induit d'un moteur à courant continu notée $I_i$ en fonction du temps t. Après une période de démarrage pendant laquelle une pointe de courant est appelée dans le circuit d'induit du moteur, l'intensité se stabilise à une valeur pratiquement constante, pour une charge mécanique donnée du moteur, une composante périodique se superposant à la valeur sensiblement constante. La composante périodique d'intensité d'induit est provoquée par la commutation périodique des balais du moteur. La fréquence de celle-ci est proportionnelle au nombre de tours par seconde de l'induit multiplié par le nombre de lames de collecteur par paire de pôles. Sur la figure 1a, on a également représenté l'angle de rotation $\theta$ en fonction du temps de l'arbre du moteur entraînant la charge. Après la période du démarrage, le nombre de périodes de la composante périodique du courant d'induit $I_i$ est représentative de l'angle $\theta$ et de la position de l'arbre du moteur.

Conformément à l'invention, le procédé de commande d'un moteur à courant continu consiste à appliquer à ce moteur les tensions d'alimentation d'induit et l'inducteur.

La composante périodique du courant d'alimentation d'induit est détectée et un comptage-décomptage du nombre de périodes de cette composante périodique est établi à partir de l'instant de démarrage du moteur.

Le nombre de périodes de la composante périodique du courant d'alimentation d'induit est comparé à une valeur de référence représentative d'une position ou nombre de tour de l'arbre du moteur.

Une commande d'arrêt du moteur est déclenchée lorsque le nombre de périodes compté ou décompté a atteint la valeur de référence.

Le procédé objet de l'invention s'applique à tout type de moteur à courant continu, tel que notamment les moteurs à excitation indépendante, les moteurs shunt ou les moteurs série et bien entendu au cas des moteurs à aimant permanent.

Dans le dernier cas précité, en l'absence d'enroulement d'inducteur, lorsque le moteur est un moteur à aimant permanent, l'instant de démarrage du moteur est défini par rapport à l'application à celui-ci de la tension d'induit.

Ainsi qu'il apparaît en outre en figure 1b, 1c, conformément au procédé objet de l'invention, le nombre de périodes de la composante périodique du courant d'induit est compté ou décompté à partir de la position de démarrage du moteur pris comme référence. Une information de position de la charge entraînée par le moteur est associée en correspondance bi-univoque au nombre de périodes compté ou décompté.

Ainsi qu'il apparaît notamment sur les figures 1b et 1c, la valeur de référence à laquelle est comparée le nombre d'impulsions compté ou décompté peut être obtenue successivement par actualisation de la valeur de position actuelle du moteur, ou de l'arbre de celui-ci, par incrémentation d'une quantité égale à la valeur algébrique de la différence entre la nouvelle position et la position de démarrage actuelle.

Ainsi, sur la figure 1b, à titre d'exemple non limitatif, l'arbre du moteur est supposé mis en rotation par un premier démarrage à partir d'une première position de référence notée O, jusqu'à une position correspondant à un nombre $N_1$ de périodes de la composante périodique du courant d'induit, le comptage-décomptage des périodes étant effectué et le nombre correspondant étant comparé à la valeur de référence $N_1$-O, puis le moteur ou l'arbre de celui-ci est ensuite amené dans une nouvelle position correspondant à un nombre $N_2$ de périodes , le nombre de périodes compté ou décompté étant alors comparé à une nouvelle valeur de référence $N_2$-$N_1$. De la même manière, l'arbre du moteur peut être amené dans une position correspondante à un nombre de périodes $N_3$ du courant d'induit, la nouvelle valeur de référence étant alors $N_3$-$N_2$ et ainsi de suite.

Conformément à la figure 1c, le déplacement de l'arbre du moteur provoque par exemple le déplacement d'une charge mécanique en translation au moyen d'un système réducteur et d'une crémaillère par exemple. La charge étant tout d'abord en position de butée de départ en zéro, celle-ci est amenée en une première position notée 1 par le comptage-décomptage de $N_1$ périodes du courant d'induit et la rotation correspondante de l'arbre du moteur, puis dans une position notée 2 par une commande en rotation en sens inverse de l'arbre du moteur pendant une durée permettant le comptage-décomptage de $N_2$ - $N_1$ périodes du courant d'alimentation d'induit. De la même manière, la charge peut ensuite être amenée dans une position notée 3, correspondant à $N_3$ périodes du courant d'alimentation d'induit, le comptage-décomptage des périodes étant effectué pendant une durée correspondant à un nombre de périodes égal à $N_3 - N_2$ à partir de la position précédente 2 et ainsi de suite. Sur la figure 1c, on a noté par $N_f$ la position en butée de fin de course de la charge correspondant par exemple à la butée en translation de cette charge sur la crémaillère précitée. Bien entendu, la commande et le procédé objet de l'invention ne sont pas limités à la seule application à un mouvement de translation de charge, la commande à tout type de mouvement pouvant être envisagée au moyen d'un système mécanique adapté à cet effet, branché sur l'arbre du moteur.

On remarquera, que le procédé objet de l'invention permet une commande de moteur à courant continu indépendamment de la vitesse de rotation de celui-ci, un même nombre d'impulsions ou périodes du courant d'alimentation d'induit étant décompté ou compté selon des temps plus ou moins importants en fonction de la charge mécanique appliquée au moteur. Typiquement, la fréquence maximale de la composante périodique du courant d'alimentation d'induit des moteurs à courant continu utilisée dans l'équipement automobile est comprise entre 200 et 1000 Hertz.

Bien entendu, le procédé objet de l'invention n'est pas limité au mode de réalisation décrit en liaison avec les figures 1b et 1c, la référence de démarrage du moteur et la valeur de référence à laquelle est comparé le nombre des périodes du courant d'induit pouvant être définie de manière autre, de façon à utiliser, si nécessaire, un comptage-décomptage plus approprié.

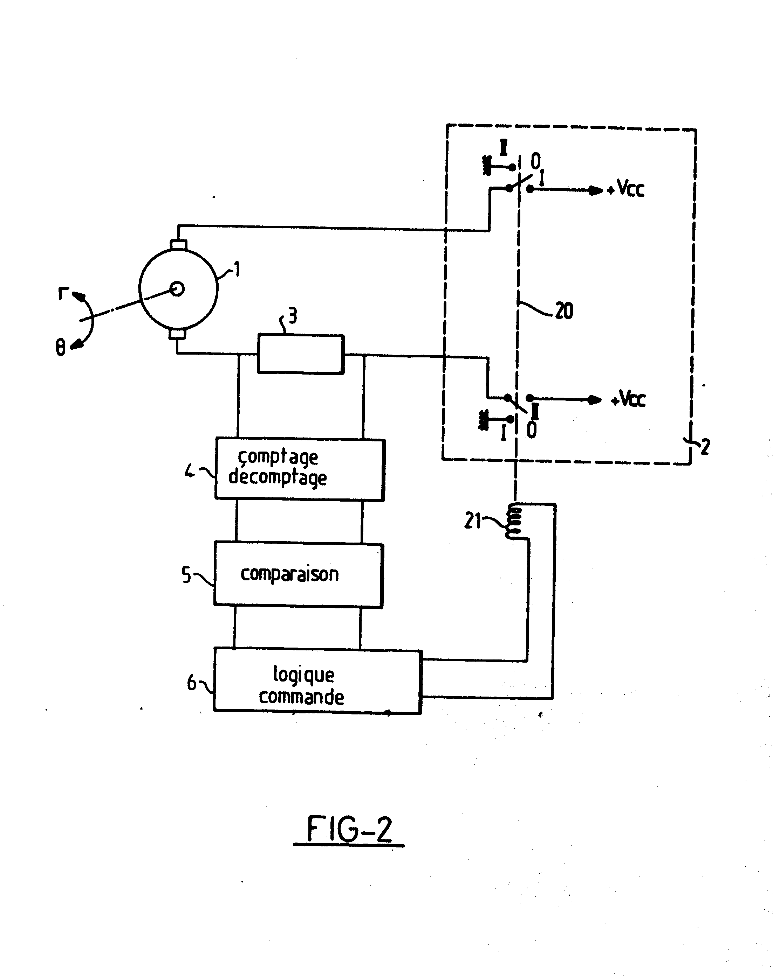

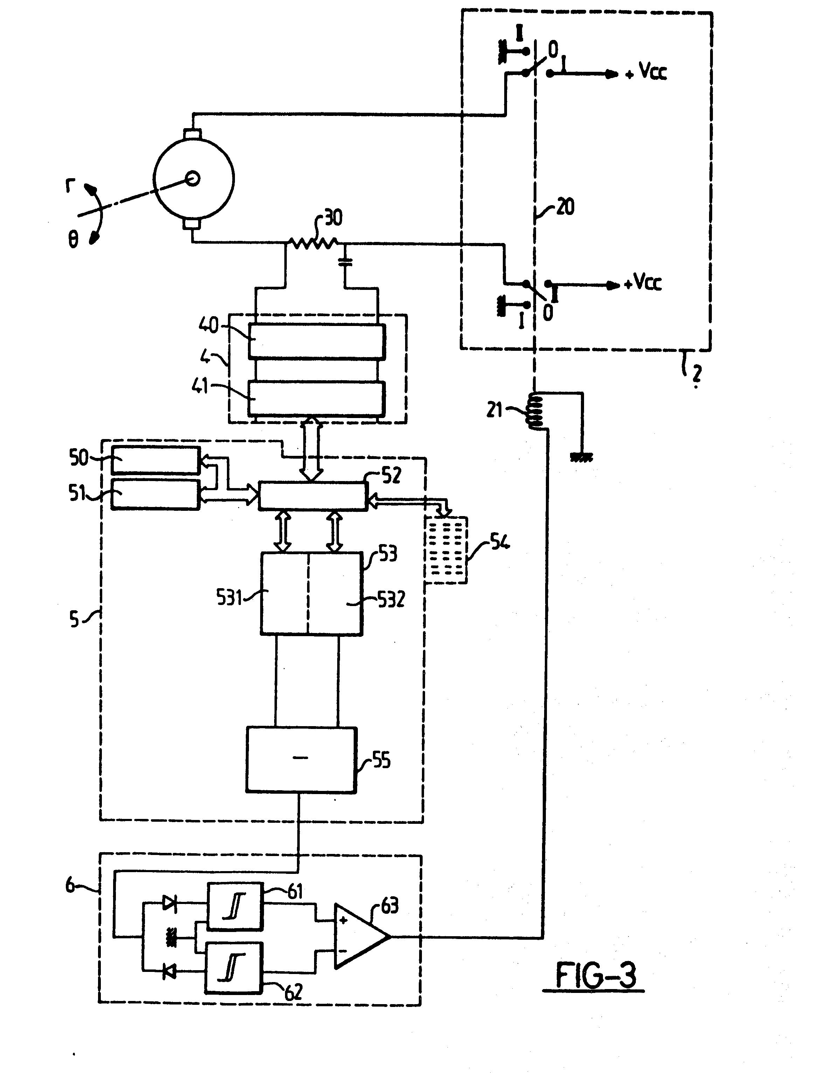

Un dispositif de commande d'un moteur à courant continu conformément à la présente invention sera maintenant décrit en liaison avec les figures 2 et 3.

Le moteur à courant continu, lorsque celui-ci est par exemple constitué par un moteur à aimant permanent, est alimenté par des moyens d'alimentation notés 2 sur la figure 2. Les moyens d'alimentation comportent une source d'énergie électrique notée +Vcc telle que par exemple la batterie d'accumulateur d'un équipement automobile. La batterie d'accumulateur +Vcc est reliée à un interrupteur à deux voies complémentées, noté 20, chacune des voies étant connectée à une borne d'alimentation d'induit du moteur 1. Chaque voie de l'interrupteur 20 est susceptible d'occuper trois positions sous l'influence d'un élément d'excitation noté 21, chaque voie complémentée occupant la position 0 en l'absence d'excitation de l'élément 21. L'excitation de l'élément 21 dans l'un ou l'autre sens d'un courant d'excitation appliqué à ce dernier, permet la mise en position I simultanée de chaque voie de l'interrupteur 20 ou II pour une excitation de l'élément 21 en sens opposé. La mise en position des deux voies complémentées en position I ou II permet la commande en rotation du moteur 1 en sens direct ou en sens rétrograde.

Ainsi qu'il apparaît en figure 2, le dispositif de commande selon l'invention comporte des moyens 3 de détection de la composante périodique du courant d'induit et des moyens 4 de comptage-décomptage du nombre de périodes de cette composante. En outre, des moyens 5 de comparaison en grandeur et en signe du nombre de périodes de la composante périodique engendrées par le fonctionnement du moteur, sont prévus
pour effectuer à partir de l'instant de démarrage du
moteur cette comparaison à une valeur de référence
représentative d'une position ou nombre de tours de
l'arbre du moteur. Des moyens d'enclenchement-déclenchement 6 des moyens d'alimentation d'induit 2 sont
en outre commandés par les moyens de comparaison 5.
La comparaison en signe permet de déclencher la commutation correspondante en fonction du signe des moyens
d'alimentation d'induit 20 pour obtenir la rotation
du moteur 1 dans l'un ou l'autre sens de rotation et
la comparaison en grandeur permet de déclencher ou
commander l'arrêt du moteur 1 lorsque le nombre de
périodes compté ou décompté a atteint la valeur de
référence. Les moyens d'enclenchement-déclenchement 6
sont directement reliés à l'élément d'excitation 21
de l'interrupteur de voie complémenté, afin d'assurer
la commande correspondante.

Ainsi qu'il apparaît en outre en figure 3
de manière non limitative, les moyens de détection 3
de la composante périodique du courant d'alimentation
d'induit comportent une charge électrique 30 connectée
en série dans le circuit d'alimentation d'induit,
cette charge électrique étant capable de développer
à ses bornes un signal représentatif de la composante
périodique du courant d'induit. La charge peut être
constituée de préférence par un élément résistif noté
30, ou un transformateur. En outre, les moyens de détection peuvent également être constitués par une
sonde à effet Hall capable d'effectuer une détection
de la valeur instantanée du courant d'induit. Dans le

cas où la charge est constituée par un transformateur ainsi que représenté en figure 3, l'enroulement primaire de celui-ci est connecté en série dans le circuit d'induit du moteur 1 et l'enroulement secondaire est refermé sur une résistance de charge.

Ainsi qu'il apparaît en outre en figure 3, les moyens de comptage-décomptage du nombre de périodes de la composante périodique du courant d'induit comprennent à titre d'exemple non limitatif, un circuit de comptage 40 du nombre de passages par zéro du signal représentatif de la composante périodique du courant d'induit. Le circuit de comptage 40 est par . exemple connecté en parallèle sur la charge électrique et délivre un signal représentatif du nombre de périodes de la composante périodique du courant d'induit. En outre, le signal précité peut être délivré par l'intermédiaire d'un circuit de type compteur 41, délivrant ce signal par exemple sous forme numérique. Le circuit de comptage 40 du nombre de passage par zéro et le compteur 41 ne seront pas décrits car ils constituent chacun des circuits classiques dans le domaine du comptage d'impulsions.

En outre, les moyens de comptage-décomptage peuvent comporter des moyens de mise en mémoire et de comparaison du signal représentatif du nombre de périodes de la composante périodique du courant d'induit à l'information de référence.

Dans le cas où le circuit de comptage du nombre de passage par zéro délivre par l'intermédiaire du compteur 41 le signal précité sous forme numérique, les moyens 5 de mise en mémoire et de comparaison de ce signal à une information de référence peuvent être constitués respectivement par une mémoire adressable 50 susceptible de mémoriser des informations constituées par des couples d'informations élémentaires relatives à une référence d'identification de positions, telles que les positions 1, 2, 3 précédemment citées, et à un nombre de périodes de la composante périodique relative à cette identification de positions. Ainsi, sont mémorisées par couple la position 1 et le nombre $N_1$, la position 2 et le nombre $N_2$ la position 3 et le nombre $N_3$ par exemple. La mémoire adressable 50 est de préférence une mémoire non volatile, telle qu'une mémoire à semi-conducteur ou analogue. Les couples d'information ainsi formés constituent un signal identifié., à chaque position correspond un nombre déterminé d'impulsions et réciproquement.

Ainsi qu'il apparaît en outre en figure 3, des moyens de mise en mémoire et de comparaison 5 peuvent comprendre une mémoire auxiliaire de travail 51 susceptible de mémoriser la valeur de référence à laquelle sera comparé le nombre d'impulsions décompté. La mémoire auxiliaire de travail 51 peut être constitué par tout type de mémoire adressable de type RAM. Un micro-processeur 52 de gestion est prévu pour assurer la gestion des informations afin de permettre la mémorisation et la transmission de celles-ci. Le micro-processeur 52 peut avantageusement être constitué par un microprocesseur 8 bits. En outre, dans le cas de l'application du procédé et du dispositif de l'invention à la commande d'équipement de véhicule automobile, le microprocesseur 52 peut être remplacé ou constitué simplement par le micro-ordinateur de bord du véhicule. Dans ce cas, la mémoire auxiliaire de travail 51 peut être constituée par la mémoire centrale du micro-ordinateur et la mémoire non volatile 50 peut être constituée par une mémoire périphérique du micro-ordinateur.

Selon un mode de réalisation non limitatif du dispositif de l'invention, les moyens de mise en mémoire et de comparaison 5 peuvent comporter un convertisseur numérique analogique deux voies noté 53, chaque voie étant notée 531, 532,recevant, par l'intermédiaire du processeur de gestion 52, les signaux délivrés par les moyens de comptage sur la première voie 531. Le convertisseur numérique-analogique 53 reçoit en outre, sur une deuxième voie 532 également par l'intermédiaire du processeur de gestion 52, des valeurs numériques mémorisées, représentatives de la valeur de référence précitée. Le convertisseur numérique analogique 53,. délivre respectivement par ses deux voies 531, 532 un premier et un deuxième signal analogique correspondant. Des moyens soustracteurs 55 constitués par exemple par un amplificateur différentiel, reçoivent sur deux entrées différentes, le premier respectivement deuxième signal analogique et délivrent un signal différence représentatif de la valeur algébrique de la différence entre le deuxième et le premier signal analogique et donc entre la valeur de référence mémorisée dans la mémoire auxiliaire 51 et le nombre d'impulsions effectivement décompté lorsque le moteur est en fonctionnement.

Les moyens d'enclenchement-déclenchement 6 des moyens 2 d'alimentation d'induit comprennent ainsi que représenté à titre d'exemple en figure 3, des moyens logique de commande notés 61, 62, 63 recevant du soustracteur 55, le signal différence et permettent en fonction du signe de ce signal différence d'opérer l'enclenchement des moyens d'enclenchement-déclenchement pour entraîner le moteur 1 dans l'un ou l'autre sens de rotation.

Les moyens logiques de commande précités permettent en outre, pour une valeur nulle du signal différence, le déclenchement des moyens d'enclenche-ent- déclenchement et l'arrêt du moteur, l'interrupteur deux voies complémentées 20 étant amené en position zéro.

Ainsi que représenté en figure 3, les moyens logiques de commande peuvent être constitués par deux déclencheurs 61 et 62 respectivement sensibles à la valeur positive et négative du signal différence délivré par le soustracteur 55, les deux déclencheurs 61 et 62 délivrant un signal positif de valeur déterminée, lorsqu'ils sont déclenchés et un signal de valeur nulle, tension de référence, en l'absence de déclenchement. La sortie des déclencheurs 61 et 62 est connectée à l'entrée positive respectivement négative d'un amplificateur opérationnel sommateur 63, dont la sortie délivre le signal d'excitation positif ou négatif à l'enroulement d'excitation 21 de l'interrupteur à deux voies complémentées 20. On comprendra que l'un ou l'autre des déclencheurs 61, 62 délivrant un signal différent de la tension de référence, l'élément d'excitation 21 est parcouru par un courant dans l'un ou l'autre sens. Bien entendu, l'excitation réelle de l'élément 21 peut être effectuée par l'intermédiaire de tout circuit amplificateur nécessaire, bien que celui-ci ne soit pas représenté en figure 3.

Le fonctionnement de l'ensemble du dispositif tel que représenté en figure 3, sera maintenant décrit en liaison avec cette figure. On a en outre représenté en 54 un clavier correspondant, soit à un clavier de commande du microprocesseur 52, soit au clavier du micro-ordinateur du véhicule.

14

Ce clavier peut être muni par exemple de boutons de commande de présélection de positions, telles que les positions 1, 2, 3 précitées. La charge étant en butée de départ en position zéro, la mise en fonctionnement du dispositif peut prévoir à partir d'un bouton de commande d'apprentissage, une phase dite d'apprentissage par laquelle les différentes positions à occuper par la charge seront mémorisées dans la mémoire non volatile 50.

Dans le cas de la commande d'un siège de véhicule, commande de positions en translation du siège par rapport au volant du véhicule par exemple, l'utilisateur ou conducteur occupant le siège, peut commander la mise en position adéquate de celui-ci au moyen du clavier et cette position étant atteinte, celle-ci est mémorisée en nombre de périodes correspondant $N_1$ par exemple pour la position 1 du premier conducteur dans la mémoire non volatile 50. Un ou plusieurs autres conducteurs peuvent alors dans une nouvelle phase d'apprentissage, définir une deuxième et/ou une troisième position correspondant à un nombre d'impulsions $N_2$ et $N_3$ ainsi que déjà citées. Ces positions sont également mémorisées dans la mémoire non volatile 50. Bien entendu, un nombre très important de positions peut être envisagé, mais il sera normalement dans la pratique limité à quelques unités. En outre, l'information de dernière position occupée par la charge ou par le siège, dite position actuelle, est mémorisée dans la mémoire non volatile 50.

A l'utilisation, la phase d'apprentissage ou les phases de l'apprentissage étant effectuées, un conducteur dont la position de conduite a été mémorisée par le nombre d'impulsions correspondantes, choisit cette position sur le clavier, par le moyen du bouton de commande correspondant, le siège se déplaçant à la position choisie par exemple conformément au procédé tel qu'il a été décrit précédemment. Dans ce but, le processeur de gestion 52 calcule tout d'abord la différence entre la position en nombre de périodes correspondant à la position choisie et la dernière position en nombre de périodes mémorisé dans la mémoire non volatile 50, cette différence constituant la valeur de référence à laquelle le nombre d'impulsions au cours du déplacement correspondant du moteur 1 pour aller de sa position de départ à la position choisie, sera comparée. La valeur de cette comparaison est donnée par le soustracteur 55, lequel par l'intermédiaire des moyens d'enclenchement déclenchement 6 provoque la commande du moteur ainsi que déjà décrite .

Bien entendu, la transmission des signaux représentatifs du nombre de périodes du courant d'induit au cours du fonctionnement du moteur, doit être effectuée par le processeur de gestion 52 à une fréquence suffisante, afin d'obtenir un fonctionnement en temps réel du système. En outre, la partie analogique constituée par le convertisseur numérique-analogique 53, le soustracteur 55 et la logique de commande 61, 62, 63 peuvent bien entendu être remplacés par tout programme conduit par le microprocesseur 52 ou micro-ordinateur du véhicule, pourvu que l'exécution de ce dernier puisse être effectuée à une fréquence de répétition suffisante autorisant le fonctionnement en temps réel.

Bien entendu le procédé et le dispositif de l'invention peuvent être utilisés pour la commande successive de positions d'une charge mécanique et en particulier de tout équipement de véhicule automobile, tel qu'un rétroviseur, les glaces de portières, un siège avant ou analogue.

Dans le cas où le siège avant commandé au moyen du procédé et du dispositif de l'invention est le siège du conducteur, le dispositif objet de l'invention peut avantageusement être utilisé, conditionnellement à une effraction du véhicule pour assurer une protection efficace contre ce genre d'évènement. Le véhicule étant muni d'un dispositif détecteur d'effraction normalement disponible dans le commerce, le signal de détection d'effraction peut avantageusement être utilisé pour amener en butée le ou les moteurs de commande du siège du conducteur, de façon à assurer un blocage du siège précité, au voisinage des organes essentiels de conduite du véhicule et une condamnation de l'espace de conduite.

Dans ce cas, conformément à l'exemple relatif aux déplacements en translation, le siège est amené en position de butée extrême à la proximité du volant du véhicule, cette position correspondant à un nombre de périodes Nf du moteur de commande en translation ainsi que représenté en figure 1c. En outre, afin de parfaire la condamnation de l'espace de conduite, le siège précité étant muni d'un système de commande en inclinaison du dossier, celui-ci peut être amené en position totalement rabattue sur le volant correspondant à une position de butée.

Bien entendu, des moyens de verrouillage de type classique peuvent être prévus afin d'assurer le verrouillage définitif du siège dans cette position de sécurité. Le retour à une position autorisant la conduite du véhicule, peut par exemple être obtenu au moyen d'une clé spéciale, détenue par le seul propriétaire du véhicule, ou au moyen de toute carte magnétique codée susceptible d'être directement interprétée par le micro-ordinateur du véhicule.

La commande du dispositif peut avantageusement être effectuée à partir d'un émetteur de télécommande de déverrouillage des portières du véhicule, lequel est alors muni d'un dispositif codé caractéristique de l'utilisateur.

On comprendra que le procédé et le dispositif de commande de moteur à courant continu conformément à l'invention sont particulièrement intéressants dans la mesure où ils permettent la mise en oeuvre de fonctions nouvelles, notamment dans le domaine de l'équipement automobile où leurs avantages permettent la multiplication des fonctions. En particulier, ils ont permis la définition d'une fonction ou procédé de protection d'un véhicule contre le vol, dans lequel le siège du conducteur est amené en position de butée et verrouillé dans cette position, de façon à assurer un blocage du siège au voisinage des organes essentiels de conduite du véhicule et une condamnation de l'espace de conduite de celui-ci.

Bien sûr, d'autres applications avantageuses peuvent être envisagées sans sortir du cadre de la présente invention.

18   0213992

REVENDICATIONS

1. Procédé de commande d'un moteur à courant continu, caractérisé en ce qu'il consiste :
- à appliquer à ce moteur les tensions d'induit et d'inducteur,
- à détecter la composante périodique du courant d'alimentation d'induit,
- à établir un comptage-décomptage du nombre de périodes de ladite composante périodique engendrées par le fonctionnement du moteur à partir de l'instant de démarrage du moteur,
- à comparer ledit nombre de périodes compté ou décompté à une valeur de référence représentative d'une position ou nombre de tours de l'arbre du moteur.
- à déclencher une commande d'arrêt du moteur lorsque le nombre de périodes comptées ou décomptées a atteint ladite valeur de référence.

2. Procédé selon la revendication 1, caractérisé en ce que dans le cas d'un moteur à aimant permanent, l'instant de démarrage du moteur est défini par rapport à l'application à celui-ci de la tension d'induit.

3. Procédé selon l'une des revendications 1 à 2, caractérisé en ce que au nombre de périodes de la composante périodique du courant d'induit, nombre compté ou décompté à partir de la position de démarrage du moteur pris comme référence, est associée en correspondance biunivoque, une information de position de la charge entraînée par le moteur, ladite valeur

0213992

19

de référence étant obtenue successivement par actualisation de la valeur de position actuelle du moteur par incrémentation d'une quantité égale à la valeur algébrique de la différence entre la nouvelle position et la position de démarrage actuelle.

4. Dispositif de commande d'un moteur à courant continu comprenant des moyens d'alimentation de l'induit du moteur capables d'assurer la rotation du moteur en sens direct ou en sens rétrograde, caractérisé en ce que ledit dispositif comporte :

- des moyens de détection de la composante périodique du courant d'alimentation d'induit ,

- des moyens de comptage-décomptage du nombre de périodes de ladite composante périodique du courant d'induit,

- des moyens de comparaison en grandeur et en signe du nombre de périodes de ladite composante périodique engendrées par le fonctionnement du moteur, à partir de l'instant de démarrage du moteur à une valeur de référence représentative d'une position ou nombre de tours de l'arbre du moteur,

- des moyens d'enclenchement-déclenchement desdits moyens d'alimentation d'induit, commandés par lesdits moyens de comparaison, ladite comparaison en signe permettant de déclencher la commutation correspondante, en fonction du signe, desdits moyens d'alimentation d'induit pour obtenir la rotation du moteur dans l'un ou l'autre sens et ladite comparaison en grandeur permettant de déclencher ou commander l'arrêt du moteur lorsque le nombre de périodes compté ou décompté a atteint ladite valeur de référence.

5. Dispositif selon la revendication 4, caractérisé en ce que les moyens de détection de la composante périodique du courant d'alimentation d'induit comportent une charge électrique connectée en série dans le circuit d'alimentation d'induit, ladite charge électrique étant capable de développer à ses bornes un signal représentatif de la composante périodique du courant d'induit.

6. Dispositif selon l'une des revendications 4 ou 5, caractérisé en ce que les moyens de comptage-décomptage du nombre de périodes de la composante périodique du courant d'induit comportent :

- un circuit de comptage du nombre de passages par zéro du signal représentatif de la composante périodique du courant d'induit, ledit circuit de comptage étant connecté en parallèle sur la charge électrique et délivrant un signal représentatif du nombre de périodes de la composante périodique du courant d'induit,

- des moyens de mise en mémoire et de comparaison dudit signal représentatif du nombre de périodes de la composante périodique du courant d'induit à l'information de référence.

7. Dispositif selon la revendication 6, caractérisé en ce que le circuit de comptage du nombre de passages par zéro délivrant ledit signal représentatif du nombre de périodes de la composante périodique du courant d'induit sous forme numérique, les moyens de mise en mémoire et de comparaison dudit signal à une information de référence sont constitués respectivement par :

- une mémoire adressable susceptible de mémoriser des informations constituées par des couples d'informations élémentaires relatives à une référence d'identification de position et à un nombre de périodes de la composante périodique relative à cette identification de position, les couples d'informations constituant un signal identifié,

- une mémoire auxiliaire de travail susceptible de mémoriser la valeur de référence,

- un microprocesseur de gestion desdites informations afin de permettre leur mémorisation et leur transmission,

- un convertisseur numérique analogique deux voies, recevant par l'intermédiaire du processeur de gestion, sur une première voie les signaux délivrés par les moyens de comptage et sur une deuxième voie les valeurs numériques mémorisées représentatives de la valeur de référence pour délivrer respectivement un premier et un deuxième signal analogique correspondant,

- des moyens soustracteurs recevant sur deux entrées le premier respectivement le deuxième signal analogique et délivrant un signal différence représentatif de la valeur algébrique de la différence entre le deuxième et le premier signal analogique.

8. Dispositif selon l'une des revendications 4, 5 ou 6, caractérisé en ce que moyens d'enclenchement - déclenchement des moyens d'alimentation d'induit comprennent :

- des moyens logiques de commande recevant le signal différence et permettant en fonction du signal du signal de différence d'opérer l'enclenchement (+,-) des moyens d'enclenchement-déclen

chement pour entraîner le moteur dans l'un ou l'autre sens de rotation, lesdits moyens logiques de commande permettant pour une valeur nulle du signal de différence le déclenchement (O) des moyens d'enclenchement déclenchement et l'arrêt du moteur.

9. Dispositif selon l'une des revendications 4 à 8, caractérisé en ce qu'il peut être commandé à prtir d'un émetteur de télécommande de déverrouillage des portières, lequel est alors muni d'un indicatif codé caractéristique de l'utilisateur.

10. Procédé de protection contre le vol d'un véhicule, caractérisé en ce que le siège du conducteur est amené en position de butée et verrouillé dans cette position de façon à assurer un blocage dudit siège au voisinage des organes essentiels de conduite du véhicule et une condamnation de l'espace de conduite de celui-ci.

11. Procédé selon la revendication 10, caractérisé en ce qu'il est mis en oeuvre au moyen du dispositif selon l'une des revendications 4 à 9 précédentes, ledit dispositif permettant, conditionnellement ou non à une effraction du véhicule, l'amenée en butée (Nf) du ou des moteurs de commande dudit siège de façon à assurer un blocage dudit siège au voisinage des organes essentiels de conduite du véhicule et une condamnation de l'espace de conduite.

12. Utilisation d'un dispositif selon l'une des revendications 4 à 9 précédentes, pour la commande successive de positions d'un équipement automobile, tel qu'un rétroviseur, les glaces de portières, un siège avant.

0213992

1/3

FIG-1a

FIG-1b

FIG-1c

FIG-2

0213992

FIG-3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | ELEKTRONIK, vol. 16, 10 août 1984, pages 40-44; H. SAX: "Tachoregelung ohne Tachogenerator" * Figures 2,3a; page 42 * | 1,4,5,7 | G 05 B 19/23 H 02 P 5/165 |
| A | ELEKTRONIK, vol. 33, no. 25, 14 décembre 1984, pages 71,72, Munich, DE; M. BIRK: "Unkonventionelle Drehzahlmessung und -regelung bei Gleichstrommotoren" | 5 | |
| A | US-A-4 511 797 (D. POHLIG et al.) * Figure 3 * | 1 | |
| A | FEINWERKTECHNIK & MESSTECHNIK, vol. 91, no. 3, avril-mai 1983, pages 113-115, Munich, DE; R.W. KOVENER et al.: "Programmierbare, elektrische Autositzverstellung mit Positionsspeicher" * En entier * | 1,4,10 | **DOMAINES TECHNIQUES RECHERCHES (Int Cl 4)** G 05 B H 02 P |

--- -/-

Le present rapport de recherche a été établi pour toutes les revendications

| Lieu de la recherche | Date d'achèvement de la recherche | Examinateur |
|---|---|---|
| LA HAYE | 28-10-1986 | BEYER F. |

## RAPPORT DE RECHERCHE EUROPEENNE

Office européen
des brevets

| | DOCUMENTS CONSIDERES COMME PERTINENTS | | Page   2 |
|---|---|---|---|

| Catégorie | Citation du document avec indication, en cas de besoin, des parties pertinentes | Revendication concernee | CLASSEMENT DE LA DEMANDE (Int Cl 4) |
|---|---|---|---|
| A | FEINWERKTECHNIK UND MESSTECHNIK, vol. 92, no. 2, mars 1984, pages 75-77, Munich, DE; L. KIESEWETTER: "Speicherprogrammierbare Rückspiegel-Verstellung für Kraftfahrzeuge" * En entier * | 1,4,10 | |
| A | DE-A-1 513 355  (Dr. MASING & CO. KG) | | |
| A | GB-A-2 072 881  (AISIN SEIKI K.K.) | | |

|  | DOMAINES TECHNIQUES RECHERCHES (Int. Cl.4) |
|---|---|

Le présent rapport de recherche a été établi pour toutes les revendications

| Lieu de la recherche | Date d achevement de la recherche | Examinateur |
|---|---|---|
| LA HAYE | 28-10-1986 | BEYER F. |